# EUROPÄISCHE PATENTSCHRIFT

(11) **EP 1 650 074 B1**
(45) Veröffentlichungstag und Bekanntmachung des Hinweises auf die Patenterteilung: **09.04.2008**
(21) Anmeldenummer: 05021799.1
(22) Anmeldetag: 06.10.2005
(51) Int. Cl.: B60N 2/02, B60H 1/00

(54) **Verfahren zum Ansteuern eines Heizgeräts für Kraftfahrzeuge**
Methode for controlling a heating device for a vehicle
Procédé de control d'un chauffage pour un véhicule

(30) Priorität: 25.10.2004 DE 102004051989
(43) Veröffentlichungstag der Anmeldung: 26.04.2006
(73) Patentinhaber: Webasto AG, 82131 Stockdorf (DE)
(72) Erfinder: Lang, Alexander, 81541 München (DE)

(56) Entgegenhaltungen:
- US-A1- 2004 158 371

## Beschreibung

Die Erfindung betrifft ein Verfahren zum Ansteuern eines Heizgeräts für Kraftfahrzeuge.

Bei bekannten Verfahren zum Ansteuern von Heizgeräten für Kraftfahrzeuge wird das Heizgerät entweder durch eine einfache drahtlose Fernbedienung oder ein Mobiltelefon mit geeigneter Ausstattung angesteuert. So zeigt die DE 100 19 895 A1 ein Verfahren zum Ansteuern einer Fahrzeugzusatzeinrichtung, insbesondere einer Fahrzeugzusatzheizvorrichtung, wobei ein Mobiltelefon über ein Mobilfunknetz mit Internetschnittstelle mit einem Rechner kommuniziert. Auf dem Rechner läuft eine Software zum Ansteuern der Fahrzeugzusatzeinrichtung, wobei der Rechner über das Mobilfunknetz mit der Fahrzeugzusatzeinrichtung kommuniziert.

Das Dokument US 2004/0158371 zeigt ein Verfahren gemäss dem Oberbegriff des Anspruchs 1.

Um eine verbesserte Ansteuerung des Heizgeräts für Kraftfahrzeuge zu erreichen, ist erfindungsgemäß vorgesehen, dass dem Heizgerät ein Datenspeicher zugeordnet ist, und ein erster Rechner mit dem Datenspeicher verbunden ist, und der erste Rechner über eine Internetverbindung mit einem zweiten Rechner verbunden ist, wobei zuerst auf Anforderung des ersten Rechners der zweite Rechner eine erste Heizgerätebetriebsdatensequenz an den ersten Rechner überträgt, und anschließend der erste Rechner eine von der ersten Heizgerätebetriebsdatensequenz abhängige zweite Heizgerätebetriebsdatensequenz an den Datenspeicher überträgt, wobei die erste und die zweite Heizgerätebetriebsdatensequenz mindestens Informationen über die Anzahl von zukünftig noch möglichen Startvorgänge des Heizgeräts betreffen.

Die Grundidee der Erfindung ist Folgende:

Einem Anwender, der beispielsweise Nutzer des Fahrzeugheizgeräts ist, steht der erste Rechner zur Verfügung, der über die Internetverbindung mit dem zweiten Rechner, der als Serverrechner dient, verbunden sein kann. Auf dem zweiten Rechner befinden sich, beispielsweise auf einer vom Anbieter der Fahrzeugheizgeräte betriebenen, wenigstens teilweise durch ein Kennwort gesicherten Internetseite, Informationen über anwenderspezifische Berechtigungen zum Betrieb des Fahrzeugheizgeräts. Diese für den Anwender zugänglichen Informationen auf der Internetseite des zweiten Rechners können auf den ersten Rechner heruntergeladen werden und dann über die Verbindung mit dem Datenspeicher an das Heizgerät weitergegeben werden. Dem Anwender stehen auf der auf dem zweiten Rechner konfigurierten Internetseite Informationen über die noch verfügbare Anzahl der Startvorgänge des Heizgeräts zur Verfügung. Durch eine Finanzüberweisung des Anwenders, beispielsweise auf ein Konto des Anbieters der Fahrzeugheizgeräte, kann die Anzahl der Startvorgänge des Heizgeräts auf der dem Anwender zugänglichen Internetseite des zweiten Rechners erhöht werden.

Vorteilhaft ist, wenn der Datenspeicher in einer Fernbedienung angeordnet ist. In einer besonders vorteilhaften Ausführungsform weist das Heizgerät eine Fernbedienungempfangseinheit auf und die Fernbedienung überträgt über die Fernbedienungempfangseinheit einen von der zweiten Heizgerätebetriebsdatensequenz abhängigen Heizgeräteaktivierungsbefehl an den Datenspeicher. In diesem Fall wird die Anzahl der Startvorgänge auf den Datenspeicher in der Fernbedienung heruntergeladen und das Heizgerät kann entsprechend der Anzahl der im Datenspeicher geladenen Startvorgänge über die Fernbedienung gestartet werden.

In einer weiteren bevorzugten Ausführungsform ist der Datenspeicher im Heizgerät angeordnet. Besonders bevorzugt ist, wenn der Datenspeicher und der erste Rechner einen USB-Anschluss aufweisen und die zweite Heizgerätebetriebsdatensequenz mittels eines einen USB-Anschluss aufweisenden Datenspeichermediums vom ersten Rechner an den Datenspeicher übertragen wird. Das Datenspeichermedium kann beispielsweise ein Speicherstift sein, an den in einem ersten Schritt die zweite Heizgerätebetriebsdatensequenz vom ersten Rechner übertragen wird. Der Speicherstift mit USB-Anschluss wird anschließend an den USB-Anschluss des Datenspeichers der Standheizung angeschlossen, wodurch neue Startvorgänge in den Datenspeicher für das Heizgerät für Kraftfahrzeuge geladen werden.

In einer weiteren bevorzugten Ausführungsform weist der Datenspeicher und der erste Rechner jeweils eine Infrarotschnittstelle auf, und die zweite Heizgerätebetriebsdatensequenz wird über die Infrarotschnittstelle vom ersten Rechner an den Datenspeicher übertragen. In diesem Fall kann die zweite Heizgerätebetriebsdatensequenz in besonders einfacher Weise vom ersten Rechner auf den Datenspeicher in der Fernbedienung oder direkt auf den Datenspeicher im Heizgerät übertragen werden.

Weitere Ausführungsformen der Erfindung sind den Unteransprüchen zu entnehmen.

Die Erfindung wird nachfolgend anhand von Ausführungsbeispielen näher erläutert, wobei auf Zeichnungen Bezug genommen wird. Die Zeichnungen zeigen:
- Fig. 1: eine schematische Darstellung einer Anordnung zur Durchführung des Verfahrens zum Ansteuern eines Heizgeräts für Kraftfahrzeuge in einer ersten Ausführungsform, und
- Fig. 2: eine zweite Ausführungsform einer Anordnung zur Durchführung des Verfahrens zum Ansteuern eines Heizgeräts für Kraftfahrzeuge.

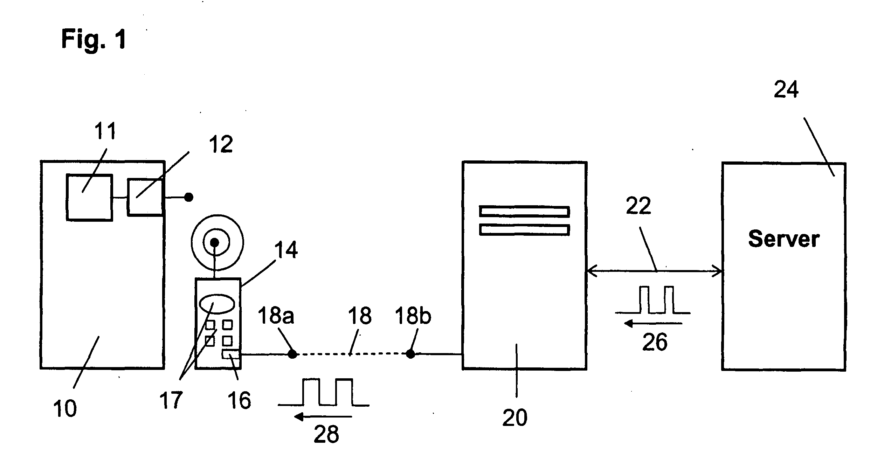

Die in Fig. 1 gezeigte Anordnung zur Durchführung eines Verfahrens zum Ansteuern eines Heizgeräts für Kraftfahrzeuge zeigt ein Heizgerät 10 für Kraftfahrzeuge. Das Heizgerät 10 für Kraftfahrzeuge umfasst einen in Mikroprozessor 11 mit einem auf diesem abgelegten Programm zum Betrieb des Heizgeräts 10 und eine mit dem Mikroprozessor 11 verbundene Fernbedienungempfangseinheit 12. Dem Heizgerät 10 ist eine Fernbedienung 14 zugeordnet, das einen Datenspeicher 16 und Anzeige- und Eingabeeinrichtungen 17 aufweist.

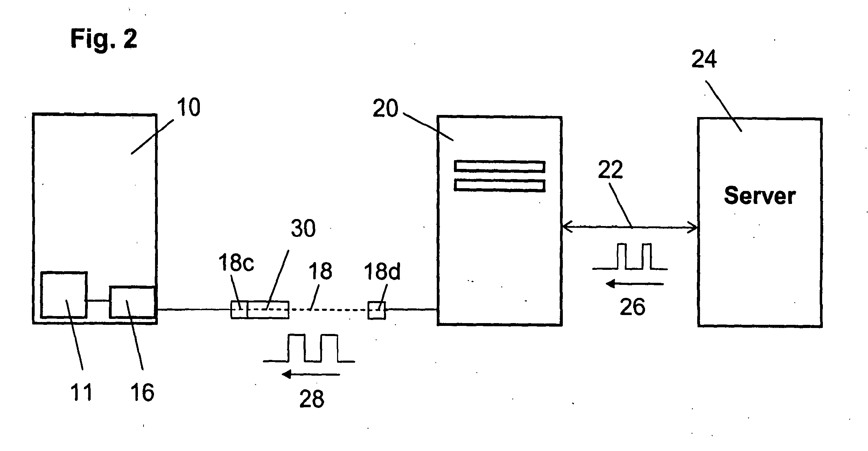

Die Fernbedienung 14 ist über eine Verbindung 18 mit einem ersten Rechner 20 verbunden, wobei die Verbindung 18 durch zwei Infrarotschnittstellen 18a, 18 b realisiert ist. Die Verbindung 18 zwischen Fernbedienung 14 und erstem Rechner 20 kann aber auch, wie in der Ausführungsform von Fig. 2 dargestellt, über USB-Anschlüsse 18c, 18d ausgeführt sein, wobei hier ein Datenspeichermedium mit USB-Anschluss 30 als Übertragungseinheit dient.

Über eine Internetverbindung 22 ist der erste Rechner 20 mit einem zweiten Rechner 24 verbunden. Vom zweiten Rechner 24 kann auf Anforderung durch den ersten Rechner 20 eine erste Heizgerätebetriebsdatensequenz 26 vom zweiten Rechner 24 auf den ersten Rechner 20 übertragen werden sowie eine zweite Heizgerätebetriebsdatensequenz 28 vom ersten Rechner 20 an den Datenspeicher 16 übertragen werden.

Das Verfahren zum Ansteuern eines Heizgeräts 10 für Kraftfahrzeuge soll im Folgenden im Detail beschrieben werden:

Über den ersten Rechner 20, der beispielsweise beim Anwender des Heizgeräts 10 für Kraftfahrzeuge oder in einer Kfz-Fachwerkstatt aufgestellt sein kann, wird eine Internetverbindung 22 zu dem zweiten Rechner 24 hergestellt, der als Server dient und eine Internetseite und eine Datenbank eines Anbieters von Heizgeräten für Kraftfahrzeuge umfasst. Über einen gesicherten Zugang hat der Anwender die Möglichkeit, den aktuellen Stand von Startvorgängen für das Heizgerät 10 für Kraftfahrzeuge abzufragen und Neustartvorgänge zu laden, indem dem Anbieter von Heizgeräten für Kraftfahrzeuge ein Geldbetrag überwiesen wird. Die angeforderte erste Heizgerätebetriebsdatensequenz 26 wird vom zweiten Rechner 24 auf den ersten Rechner 20 übertragen. Anschließend kann der Nutzer des Heizgeräts 10 für Kraftfahrzeuge oder die Kfz-Fachwerkstatt die zweite Heizgerätebetriebsdatensequenz 28 über die Verbindung 18 auf den Datenspeicher 16 in der Fernbedienung 14 übertragen. Erste und zweite Heizgerätebetriebsdatensequenz 26, 28 enthalten mindestens Informationen über die Anzahl der Startvorgänge des Heizgeräts 10.

Das Heizgerät für Kraftfahrzeuge 10 kann nun entsprechend der Anzahl der in dem Datenspeicher 16 abgelegten Startvorgänge über die Fernbedienung 14 mittels des auf dem Mikroprozessor 11 abgelegten Programms zum Betrieb des Heizgeräts 10 gestartet werden. Jedes Einschalten des Heizgeräts für Kraftfahrzeuge 10 reduziert die Anzahl der Startvorgänge des Heizgeräts im Datenspeicher 16 um einen. Bei einer kleinen Zahl von Startvorgängen im Datenspeicher 16 löst das auf dem Mikroprozessor 11 abgelegte Programm eine (nicht dargestellte) Anzeige am Heizgerät 10 aus, um den Anwender auf die Notwendigkeit des Nachladens des Datenspeichers 16 aufmerksam zu machen. Ist die Anzahl der Startvorgänge im Datenspeicher 16 auf Null gefallen, so kann das Heizgerät 10 nicht mehr gestartet werden, solange nicht wieder über die Verbindung 18 eine zweite Heizgerätebetriebsdatensequenz 28 mit neuen Startvorgängen in den Datenspeicher 16 übertragen wird.

Fig. 2 zeigt eine zweite Ausführungsform der Anordnung zur Durchführung eines Verfahrens zum Ansteuern eines Heizgeräts 10 für Kraftfahrzeuge, die weitgehend mit der Ausführungsform der Fig. 1 übereinstimmt, wobei der Datenspeicher 16 hier jedoch unmittelbar im Heizgerät 10 für Kraftfahrzeuge angeordnet ist. Die Verbindung 18 zwischen erstem Rechner 20 und Datenspeicher 16 erfolgt hier über USB-Anschlüsse 18c, 18d und das Datenspeichermedium mit USB-Anschluss 30, wobei jedoch auch hier Infrarotschnittstellen 18a, 18b wie in Fig. 1 eingesetzt werden können.

Im Folgenden wird das Verfahren zum Ansteuern eines Heizgeräts für Kraftfahrzeuge gemäß der Ausführungsform von Fig. 2 beschrieben:

Wie auch bei der ersten Ausführungsform wird über den ersten Rechner 20 durch eine Anforderung an den zweiten Rechner 24 eine erste Heizgerätebetriebsdatensequenz 26 an den ersten Rechner 20 übertragen. Die Heizgerätebetriebsdatensequenz 26 umfasst mindestens Informationen über die Zahl der Startvorgänge des Heizgeräts 10. Über den USB-Anschluss 18d wird die zweite Heizgerätebetriebsdatensequenz 28 auf das Datenspeichermedium mit USB-Anschluss 30 übertragen. Das Datenspeichermedium mit USB-Anschluss 30 kann dann am USB-Anschluss 18c angeschlossen werden und die zweite Heizgerätebetriebsdatensequenz 28 an den Datenspeicher 16 übertragen werden, wodurch eine festgelegte Zahl von Startvorgängen direkt in dem Heizgerät 10 für Kraftfahrzeuge gespeichert ist. Die Speicherung der Zahl der Startvorgänge im Datenspeicher 16 kann sowohl direkt vom Nutzer des Heizgeräts 10 für Kraftfahrzeuge, von einer Kfz-Werkstatt oder direkt vom Vertreiber des Heizgeräts 10 durchgeführt werden.

Bei jedem Einschalten des Heizgeräts 10 für Kraftfahrzeuge wird ein gespeicherter Startvorgang verbraucht. Ist nur noch eine geringe Zahl von Startvorgängen auf dem Datenspeicher 16 gespeichert, so kann dies dem Anwender an einem (nicht dargestellten) Anzeigeelement des Heizgeräts 10 gemeldet werden.

In einer weiteren bevorzugten Ausführungsform der Erfindung beinhaltet die zweite Heizgerätebetriebsdatensequenz 28 auch Informationen über eine Betriebsdauer des Heizgeräts 10. In anderen bevorzugten Ausführungsformen der Erfindung umfasst die zweite Heizgerätebetriebsdatensequenz 28 auch Informationen über eine Heizleistung bzw. über ein zeitabhängiges Heizleistungsprofil des Heizgerätes 10. Bei diesen Ausführungsformen wird bei jedem Einschalten des Heizgeräts 10 für Kraftfahrzeuge ein gespeicherter Startvorgang, eine bestimmte Betriebsdauer, eine festgelegte Heizleistung oder ein zeitabhängiges Heizleistungsprofil des Heizgeräts im Datenspeicher 16 verbraucht. Auch diese Betriebsgrößen können in der oben beschriebenen Weise durch Übertragen der zweiten Heizgerätebetriebsdatensequenz 28 an den Datenspeicher 16 wieder in den Datenspeicher 16 geladen werden.

### Bezugszeichenliste

- 10: Heizgerät
- 11: Mikroprozessor
- 12: Fernbedienungempfangseinheit
- 14: Fernbedienung
- 16: Datenspeicher
- 17: Anzeige- und Eingabeeinrichtungen
- 18: Verbindung
- 18a, 18b: Infrarotschnittstelle
- 18c, 18d: USB-Anschluß
- 20: erster Rechner
- 22: Internetverbindung
- 24: zweiter Rechner
- 26: erste Heizgerätebetriebsdatensequenz
- 28: zweite Heizgerätebetriebsdatensequenz
- 30: Datenspeichermedium mit USB-Anschluß

## Patentansprüche

1. Verfahren zum Ansteuern eines Heizgeräts (10) für Kraftfahrzeuge, wobei dem Heizgerät (10) ein Datenspeicher (16) zugeordnet ist, und ein erster Rechner (20) mit dem Datenspeicher (16) verbunden ist, und der erste Rechner (20) über eine lnternetverbindung (22) mit einem zweiten Rechner (24) verbunden ist, wobei zuerst auf Anforderung des ersten Rechners (20) der zweite Rechner (24) eine erste Heizgerätebetriebsdatensequenz (26) an den ersten Rechner (20) überträgt, und anschließend der erste Rechner (20) eine von der ersten Heizgerätebetriebsdatensequenz (26) abhängige zweite Heizgerätedatensequenz (28) an den Datenspeicher (16) überträgt, **dadurch gekennzeichnet, dass** die erste und die zweite Heizgerätebetriebsdatensequenz (26, 28) mindestens Informationen umfassen, welche die Anzahl von zukünftig noch möglichen Startvorgängen des Heizgeräts (10) betreffen.

2. Verfahren zum Ansteuern eines Heizgeräts (10) für Kraftfahrzeuge nach Anspruch 1, **dadurch gekennzeichnet, dass** der Datenspeicher (16) in einer Fernbedienung (14) angeordnet ist.

3. Verfahren zum Ansteuern eines Heizgeräts (10) für Kraftfahrzeuge nach Anspruch 2, **dadurch gekennzeichnet, dass** das Heizgerät (10) eine Fernbedienungempfangseinheit (12) aufweist und die Fernbedienung (14) über die Fernbedienungempfangseinheit (12) einen von der zweiten Heizgerätebetriebsdatensequenz (28) abhängigen Heizgeräteaktivierungsbefehl an den Datenspeicher (16) überträgt.

4. Verfahren zum Ansteuern eines Heizgeräts (10) für Kraftfahrzeuge nach Anspruch 1, **dadurch gekennzeichnet, dass** der Datenspeicher (16) im Heizgerät (10) angeordnet ist.

5. Verfahren zum Ansteuern eines Heizgeräts (10) für Kraftfahrzeuge nach einem der vorhergehenden Ansprüche, **dadurch gekennzeichnet, dass** sowohl der Datenspeicher (16) als auch der erste Rechner (20) einen USB-Anschluß (18c, 18d) aufweist und die zweite Heizgerätebetriebsdatensequenz (28) mittels eines Datenspeichermediums mit USB-Anschluß (30) vom ersten Rechner (20) an den Datenspeicher (16) übertragen wird.

6. Verfahren zum Ansteuern eines Heizgeräts (10) für Kraftfahrzeuge nach einem der Ansprüche 1 bis 4, **dadurch gekennzeichnet, dass** der Datenspeicher (16) und der erste Rechner (20) jeweils eine Infrarotschnittstelle (18a, 18b) aufweist und die zweite Heizgerätebetriebsdatensequenz (28) über die Infrarotschnittstellen (18a, 18b) vom ersten Rechner (20) an den Datenspeicher (16) übertragen wird.

7. Verfahren zum Ansteuern eines Heizgeräts (10) für Kraftfahrzeuge nach einem der vorhergehenden Ansprüche, **dadurch gekennzeichnet, dass** die zweite Heizgerätebetriebsdatensequenz (28) Informationen über eine Betriebsdauer des Heizgeräts (10) beinhaltet.

8. Verfahren zum Ansteuern eines Heizgeräts (10) für Kraftfahrzeuge nach einem der vorhergehenden Ansprüche, **dadurch gekennzeichnet, dass** die zweite Heizgerätebetriebsdatensequenz (28) Informationen über eine Heizleistung des Heizgeräts (10) beinhaltet.

9. Verfahren zum Ansteuern eines Heizgeräts (10) für Kraftfahrzeuge nach einem der vorhergehenden Ansprüche, **dadurch gekennzeichnet, dass** die zweite Heizgerätebetriebsdatensequenz (28) Informationen über ein zeitabhängiges Heizleistungsprofil des Heizgeräts (10) beinhaltet.

## Claims

1. Method for controlling a heating device (10) for motor vehicles, wherein a data store (16) is assigned to the heating device (10), and a first computer (20) is connected to the data store (16), and the first computer (20) is connected to a second computer (24) via an Internet connection (22), wherein the second computer (24) first transmits, at the request of the first computer (20), a first heating device operating data sequence (26) to the first computer (20), and the first computer (20) subsequently transmits a second heating device operating data sequence (28), dependent on the first heating device operating data sequence (26), to the data store (16), **characterized in that** the first and second heating device operating data sequences (26, 28) comprise at least information which relates to the number of starting processes of the heating device (10) which are still possible in the future.

2. Method for controlling a heating device (10) for motor vehicles according to Claim 1, **characterized in that** the data store (16) is arranged in a remote control device (14).

3. Method for controlling a heating device (10) for motor vehicles according to Claim 2, **characterized in that** the heating device (10) has a remote control receiver unit (12), and the remote control device (14) transmits, via the remote control receiver unit (12), a heating device activation command to the data store (16), which command is dependent on the second heating device operating data sequence (28).

4. Method for controlling a heating device (10) for motor vehicles according to Claim 1, **characterized in that** the data store (16) is arranged in the heating device (10).

5. Method for controlling a heating device (10) for motor vehicles according to one of the preceding claims, **characterized in that** both the data store (16) and the first computer (20) have a USB port (18c, 18d), and the second heating device operating data sequence (28) is transmitted to the data store (16) from the first computer (20) by means of a data storage medium with USB port (30).

6. Method for controlling a heating device (10) for motor vehicles according to one of Claims 1 to 4, **characterized in that** the data store (16) and the first computer (20) each have an infrared interface (18a, 18b), and the second heating device operating data sequence (28) is transmitted to the data store (16) from the first computer (20) via the infrared interfaces (18a, 18b).

7. Method for controlling a heating device (10) for motor vehicles according to one of the preceding claims, **characterized in that** the second heating device operating data sequence (28) includes information about a service life of the heating device (10).

8. Method for controlling a heating device (10) for motor vehicles according to one of the preceding claims, **characterized in that** the second heating device operating data sequence (28) includes information about a heating power of the heating device (10).

9. Method for controlling a heating device (10) for motor vehicles according to one of the preceding claims, **characterized in that** the second heating device operating data sequence (28) includes information about a time-dependent heating power profile of the heating device (10).

## Revendications

1. Procédé pour commander un appareil de chauffage (10) pour véhicules automobiles, une mémoire de données (16) étant associée à l'appareil de chauffage (10) et un premier ordinateur (20) étant relié avec la mémoire de données (16) et le premier ordinateur (20) étant relié avec un deuxième ordinateur (24) par le biais d'une liaison Internet (22), le deuxième ordinateur (24) transmettant tout d'abord une première séquence de données opérationnelles d'appareil de chauffage (26) au premier ordinateur (20) sur demande du premier ordinateur (20) et le premier ordinateur (20) transmettant ensuite à la mémoire de données (16) une deuxième séquence de données opérationnelles d'appareil de chauffage (28) qui dépend de la première séquence de données opérationnelles d'appareil de chauffage (26), **caractérisé en ce que** la première et la deuxième séquences de données opérationnelles d'appareil de chauffage (26, 28) contiennent au moins des informations qui concernent le nombre de futurs processus de démarrage encore possibles de l'appareil de chauffage (10).

2. Procédé pour commander un appareil de chauffage (10) pour véhicules automobiles selon la revendication 1, **caractérisé en ce que** la mémoire de données (16) est disposée dans une télécommande (14).

3. Procédé pour commander un appareil de chauffage (10) pour véhicules automobiles selon la revendication 2, **caractérisé en ce que** l'appareil de chauffage (10) présente une unité de réception de télécommande (12) et la télécommande (14) transmet à la mémoire de données (16) par le biais de l'unité de réception de télécommande (12) une instruction d'activation de l'appareil de chauffage qui dépend de la deuxième séquence de données opérationnelles d'appareil de chauffage (28).

4. Procédé pour commander un appareil de chauffage (10) pour véhicules automobiles selon la revendication 1, **caractérisé en ce que** la mémoire de données (16) est disposée dans l'appareil de chauffage (10).

5. Procédé pour commander un appareil de chauffage (10) pour véhicules automobiles selon l'une des revendications précédentes, **caractérisé en ce que** la mémoire de données (16) ainsi que le premier ordinateur (20) présente une prise USB (18c, 18d) et la deuxième séquence de données opérationnelles d'appareil de chauffage (28) est transmise du premier ordinateur (20) à la mémoire de données (16) au moyen d'un support de mémorisation équipé d'une prise USB (30).

6. Procédé pour commander un appareil de chauffage (10) pour véhicules automobiles selon l'une des revendications 1 à 4, **caractérisé en ce que** la mémoire de données (16) et le premier ordinateur (20) présentent respectivement une interface à infrarouges (18a, 18b) et la deuxième séquence de données opérationnelles d'appareil de chauffage (28) est transmise du premier ordinateur (20) à la mémoire de données (16) par le biais des interfaces à infrarouges (18a, 18b).

7. Procédé pour commander un appareil de chauffage (10) pour véhicules automobiles selon l'une des revendications précédentes, **caractérisé en ce que** la deuxième séquence de données opérationnelles d'appareil de chauffage (28) contient des informations sur une durée de fonctionnement de l'appareil de chauffage (10).

8. Procédé pour commander un appareil de chauffage (10) pour véhicules automobiles selon l'une des revendications précédentes, **caractérisé en ce que** la deuxième séquence de données opérationnelles d'appareil de chauffage (28) contient des informations sur une puissance de chauffe de l'appareil de chauffage (10).

9. Procédé pour commander un appareil de chauffage (10) pour véhicules automobiles selon l'une des revendications précédentes, **caractérisé en ce que** la deuxième séquence de données opérationnelles d'appareil de chauffage (28) contient des informations sur un profil de puissance de chauffe dépendant du temps de l'appareil de chauffage (10).
